# EUROPÄISCHE PATENTSCHRIFT

(11) **EP 1 491 749 B1**
(45) Veröffentlichungstag und Bekanntmachung des Hinweises auf die Patenterteilung: **09.04.2008**
(21) Anmeldenummer: 04102446.4
(22) Anmeldetag: 01.06.2004
(51) Int. Cl.: F02D 41/02, F02D 41/30, F01N 11/00

(54) **Verfahren zum Betreiben einer Brennkraftmaschine**
Method for operating an internal combustion engine
Procédé de commande d'un moteur à combustion interne

(30) Priorität: 23.06.2003 DE 10328117
(43) Veröffentlichungstag der Anmeldung: 29.12.2004
(73) Patentinhaber: Volkswagen AG, 38436 Wolfsburg (DE)
(72) Erfinder: ZILLMER, Michael, Dr.-Ing., 38173, Sickte (DE); POTT, Ekkehard, Dr.-Ing., 38518, Gifhorn (DE); MAGNOR, Olaf, 38104, Braunschweig (DE)
(74) Vertreter: Kandlbinder, Markus Christian

(56) Entgegenhaltungen:
- EP-A- 1 081 363
- EP-A- 1 201 900
- WO-A-01/07769
- DE-A1- 10 135 954

## Beschreibung

Die Erfindung betrifft ein Verfahren zum Betreiben einer Brennkraftmaschine, insbesondere Ottomotor, insbesondere eines Kraftfahrzeuges, wobei in einer Abgasnachbehandlungsanlage zumindest ein in einem Abgas enthaltener HC-Massenstrom katalytisch konvertiert wird, gemäß dem Oberbegriff des Anspruchs 1.

Bei magerlauffähigen Ottomotoren kann die Gemischbildung und Verbrennung auf verschiedene Arten erfolgen. So ermöglichen diese Motoren in der Regel neben dem konventionellen, homogen-stöchiometrischen Betrieb mit früher Gemischbildung auch einen geschichteten Betrieb mit später Gemischbildung und hohem Luftüberschuß. Dieser Schichtbetrieb ermöglicht die größten Kraftstoffverbrauchseinsparungen ggü. dem homogen-stöchiometrischen Betrieb. Desweiteren können diese Motoren in der Regel auch in einem homogen-mageren Modus betrieben werden. Auch diese Motorbetriebsart ermöglicht eine Absenkung des Kraftstoffverbrauchs. Der Bereich für geschichteten Motorbetrieb und homogen-mageren Motorbetrieb ist jedoch auf einen Teil des Motorbetriebskennfeldes beschränkt. Im realen Fahrbetrieb oder auch in Abgaszyklen (beispielsweise NEFZ) werden somit entsprechend den vorliegenden Motordrehzahlen und angeforderten Motorbelastungen mehrere Motorbetriebsarten durchlaufen. Aus Verbrauchsgründen wird angestrebt, einen möglichst großen Anteil der Fahrstrecke im Schichtbetrieb zu fahren.

Zur Abgasreinigung von mager betreibbaren Ottomotoren werden häufig NOₓ-Speicherkatalysatoren eingesetzt. Diese Katalysatoren besitzen 3-Wege-Eigenschaften, sind aber im Gegensatz zu konventionellen 3-Wege-Katalysatoren auch bei überstöchiometrischer Gemischzusammensetzung (Luftüberschuß) in der Lage, Stickoxide (NOₓ) zu konvertieren. Dabei werden die Stickoxide im Luftüberschuß durch Nitratbildung an einer Speicherkomponente des NOₓ-Speicherkatalysators eingelagert. Durch einen kurzzeitigen unterstöchiometrischen Motorbetrieb (Kraftstoffüberschuß) werden die Stickoxide anschließend wieder aus dem Katalysator herausgelöst und an den Edelmetallkomponenten des NOₓ-Speicherkatalysators wieder zu unschädlichen Stoffen konvertiert. Das Arbeitstemperaturfenster derartiger NOₓ-Speicherkatalysatoren für die Stickoxidkonvertierung bei magerem Motorbetrieb liegt etwa zwischen 250°C und 550°C.

Die Katalysatoranlagen von magerlauffähigen Ottomotoren bestehen in der Regel aus einem motornahen Vorkatalysator (3-Wege-Katalysator) und einem in Unterbodenposition angeordneten Hauptkatalysator in Form eines NOₓ- Speicherkatalysators. Um den Motor nach einem Kaltstart mager betreiben zu können, muß abgewartet werden, bis eine Temperatur des NOₓ-Speicherkatalysators im Arbeitstemperaturfenster liegt, um erhöhte Emissionen, insbesondere erhöhte NOₓ-Emissionen, zu vermeiden. Bis zu diesem Zeitpunkt wird der Motor homogen-stöchiometrisch betrieben, wobei der Vorkatalysator einen Großteil der Konvertierungsleistung erbringt. Auch nachdem der Hauptkatalysator seine Betriebstemperatur erreicht hat, wird sowohl im stöchiometrischen als auch im überstöchiometrischen Motorbetrieb der überwiegende Teil der HC- und CO-Konvertierung im Vorkatalysator erbracht. Dabei ist von Vorteil, daß der Vorkatalysator aufgrund der motornahen Einbauposition ein höheres Temperaturniveau als der Hauptkatalysator aufweist. Der Hauptkatalysator wird insbesondere bei höheren Abgasmassen- bzw. Schadstoffmassenströmen für die den Vorkatalysator dann zunehmend überlaufenden Schadstoffe benötigt.

Im Schichtbetrieb weist der magerlauffähige Ottomotor höhere HC-Rohemissionen als im homogenen Betrieb auf. Dies kann auf eine direkte Benetzung des Kolbens mit flüssigem Kraftstoff, auf eine verkürzte Gemischbildungszeit als auch auf das Vorliegen von Brennraumzonen mit sehr magerer, nicht mehr durchbrennfähiger Gemischzusammensetzung zurückgeführt werden. Die HC-Emissionen zeigen zudem eine deutliche Abhängigkeit von der Motortemperatur, wobei die HC-Emissionen vom Kaltstart bis zum Erreichen der Betriebstemperatur kontinuierlich abnehmen und bei betriebswarmen Motor einen konstanten Wert erreichen. Die erhöhten HC-Emissionen des Schichtbetriebes erfordern eine entsprechend hohe Konvertierungsleistung des Katalysatorsystems, um die Schadstoffgrenzwerte dennoch einhalten zu können. Eine typische HC-Konvertierungskurve in Abhängigkeit von der Temperatur charakterisiert das Ansprechverhalten des Katalysators bzgl. der Schadstoffkonvertierung mit ansteigender Temperatur (Light-Off-Verfahren). Mit zunehmender Alterung verschiebt sich die Kurve zu höheren Temperaturen, d.h. der Katalysator erbringt dann bei gleicher Temperatur eine geringere Konvertierungsleistung.

Unter Umständen ist das Katalysatorsystem bei sehr starker Alterung und uneingeschränktem Schichtbetrieb jedoch nicht mehr in der Lage, eine ausreichend hohe Konvertierungsleistung für die Erfüllung der Abgasschadstoffgrenzwerte zu erbringen.

Aus der DE 196 50 518 C1 ist es bekannt, eine Brennkraftmaschine mit Direkteinspritzung in Abhängigkeit von einer Kühlmitteltemperatur entweder mit homogenem Gemisch oder alternativ mit einer Schichtladung zu betreiben. Dadurch kann eine schnellere Aufheizung sowohl des Katalysators, als auch der Brennkraftmaschine selbst erzielt werden. Hierbei wird in Abhängigkeit von der Kühlmitteltemperatur zwischen zwei Kennfeldern umgeschaltet.

Aus der DE 101 14 456 A1 ist es bekannt, bei direkteinspritzenden Brennkraftmaschinen abgasrelevante Maßnahmen, wie beispielsweise NOₓ-Regeneration, Entschwefelung, Hochtemperatur-Entschwefelung, stöchiometrischen Homogenbetrieb oder eine Fehleranzeige, in Abhängigkeit von einem Zustand des Katalysators einzuleiten. Hierbei wird bei irreversibel geschädigter Speicherkomponente aber funktionstüchtiger Katalysatorkomponente eines NOx-Speicherkatalysators ein stöchiometrischer Homogenbetrieb aufgenommen, um trotzdem noch die Gesamtemission gering zu halten.

Aus der DE 100 51 184 A1 ist ein Verfahren zur Steuerung einer magerlauffähigen Verbrennungskraftmaschine bekannt, wobei unzulässige Verbrennungsereignisse registriert und ein Magerbetrieb mit zunehmender Häufigkeit der unzulässigen Verbrennungsereignisse eingeschränkt oder gesperrt wird. Dieses Verfahren ermöglicht bei der Zulassung eines Magerbetriebs der Verbrennungskraftmaschine die Berücksichtigung einer durch unzulässige Verbrennungsereignisse hervorgerufene Beeinträchtigung des Katalysatorsystems hinsichtlich seiner Konvertierungsrate, so daß im Ergebnis eine Schadstoffemission reduziert wird.

Die DE 101 48 128 A1 beschreibt ein Verfahren zur Reduzierung einer Schadstoffemission einer fremdgezündeten mit mindestens einem der Brennkraftmaschine nachgeschalteten Katalysator zur Konvertierung und/oder Speicherung mindestens einer Abgaskomponente eines Abgases der Brennkraftmaschine. Hierbei wird in Abhängigkeit einer Konvertierungs- und/oder Speicherkapazität des mindestens einen Katalysators ein Zündwinkel mindestens eines Zylinders der Brennkraftmaschine gegenüber einem Grundzündwinkel verstellt.

Aus der DE 199 10 336 A1 ist ein Verfahren zum Erkennen eines defekten Katalysators einer Abgasnachbehandlungsanlage einer Brennkraftmaschine bekannt, wobei während eines gleichartigen Betriebszustandes ein statistisch abgesicherter Abgasmittelwert berechnet und mit einem für diesen Betriebszustand gespeicherten zulässigen Abgaswert verglichen wird. Bei Abweichung des aktuellen Mittelwertes von dem zulässigen Abgaswert wird ein defekter Katalysator erkannt.

Der Erfindung liegt die Aufgabe zugrunde, ein Emissions- bzw. Verbrauchsverhalten einer Brennkraftmaschine zu verbessern.

Diese Aufgabe wird erfindungsgemäß durch ein Verfahren der o.g. Art mit den in Anspruch 1 angegebenen Verfahrensschritten gelöst. Vorteilhafte Ausgestaltungen der Erfindung sind in den abhängigen Ansprüchen angegeben.

Dazu sind bei einem Verfahren der o.g. Art erfindungsgemäß folgende Schritte vorgesehen:
(a) Bestimmen eines von der Abgasnachbehandlungsanlage an einem aktuellen Betriebspunkt der Brennkraftmaschine maximal konvertierbaren HC-Massenstromes in Abhängigkeit von einem Zustand der Abgasnachbehandlungsanlage,
(b) Bestimmen eines von der Brennkraftmaschine abgegebenen, aktuellen HC-Massenstromes für wenigstens eine vorbestimmte Betriebsart an dem aktuellen Betriebspunkt der Brennkraftmaschine,
(c) Vergleichen des in Schritt (a) bestimmten maximal konvertierbaren HC-Massenstrom mit dem in Schritt (b) bestimmten aktuellen HC-Massenstrom für die vorbestimmte Betriebsart, und
(d) Unterdrücken und/oder modifizieren der vorbestimmten Betriebsart, wenn der in Schritt (a) bestimmte maximal konvertierbare HC-Massenstrom kleiner ist als der in Schritt (b) bestimmte aktuelle HC-Massenstrom und Zulassen der vorbestimmten Betriebsart, wenn der in Schritt (a) bestimmte maximal konvertierbare HC-Massenstrom größer oder gleich ist als der in Schritt (b) bestimmte aktuelle HC-Massenstrom.

Dies hat den Vorteil, daß bereits vor einem Wechsel in eine andere Betriebsart, beispielsweise in den Schichtbetrieb, überprüft wird, ob der dann vorliegende HC-Massenstrom mit ausreichend hohem Wirkungsgrad konvertiert werden kann. Dies erzielt eine bedarfsgerechte Steuerung der Motorbetriebsarten in Abhängigkeit vom Katalysatorzustand. Auf diese Weise wird beispielsweise eine Schichtbetriebsfreigabe gezielt in Abhängigkeit von dem HC-Massenstrom im Schichtbetrieb und der möglichen Katalysatorkonvertierungsleistung und nur in den emissionskritischen Phasen des Betriebs der Brennkraftmaschine unterdrückt, so daß ein größtmöglicher Verbrauchsvorteil des Schichtbetriebs auch bei gealterten Katalysatoren aufrechterhalten wird.

Beispielsweise umfaßt der Zustand der Abgasnachbehandlungsanlage eine Temperatur und/oder einen Alterungszustand der Abgasnachbehandlungsanlage, wobei optional die Temperatur der Abgasnachbehandlungsanlage als eine Temperatur wenigstens eines Vorkatalysators und/oder wenigstens eines Hauptkatalysators der Abgasnachbehandlungsanlage bestimmt wird.

Zweckmäßigerweise wird der Alterungszustand der Abgasnachbehandlungsanlage als ein Alterungszustand wenigstens eines Vorkatalysators und/oder wenigstens eines Hauptkatalysators der Abgasnachbehandlungsanlage bestimmt.

In einer bevorzugten Ausführungsform wird der aktuelle Betriebspunkt in Abhängigkeit von einer Motordrehzahl und einer Motorlast, beispielsweise einem Motordrehmoment, bestimmt.

Die vorbestimmte Betriebsart der Brennkraftmaschine ist beispielsweise ein homogen-stöchiometrischer Betrieb, ein Homogen-Magerbetrieb und/oder ein Schichtbetrieb.

Ein besonders schnelles und kostengünstig realisierbares Verfahren erzielt man dadurch, daß in Schritt (b) der aktuelle HC-Massenstrom aus einem für eine jeweilige Betriebsart vorbestimmten HC-Emissionskennfeld bestimmt wird.

Zur weiteren Adaption wird der in Schritt (b) bestimmte aktuelle HC-Massenstrom in Abhängigkeit von wenigstens einem Betriebsparameter des aktuellen Betriebspunktes der Brennkraftmaschine korrigiert, wobei der Betriebsparameter beispielsweise eine Motortemperatur, einen Einspritzzeitpunkt, einen Zündzeitpunkt, eine Nockenwellenposition, einen Saugrohrdruck, eine AGR-Rate und/oder eine Position einer Ladungsbewegungsklappe umfaßt.

Um entsprechende Vorteile einer ggf. unterdrückten Betriebsart, beispielsweise einen Verbrauchsvorteil eines Schichtbetriebs, nicht vollständig zu verlieren wird zunächst geprüft, ob die in Schritt (d) unterdrückte Betriebsart mit derart modifizierten Betriebsparametern zugelassen werden kann, so daß der sich dann einstellende HC-Massenstrom kleiner oder gleich als der in Schritt (a) bestimmte maximal konvertierbare HC-Massenstrom ist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine graphische Veranschaulichung des erfindungsgemäßen Verfahrens für ein vorgegebenes Fahrprofil,
- Fig. 2: ein schematisches Ablaufdiagramm einer bevorzugten Ausführungsform des erfindungsgemäßen Verfahrens.

Nachfolgend wird die Erfindung beispielhaft anhand eines bzgl. der HC-Emissionen besonders kritischen Schichtbetriebes erläutert. Dies ist jedoch lediglich beispielhaft und das erfindungsgemäße Verfahren ist nicht auf die Unterdrückung bzw. Modifikation des Schichtbetriebs beschränkt.

Bei dem erfindungsgemäßen Verfahren ist es vorgesehen, daß in solchen Betriebsphasen einer Brennkraftmaschine mit Katalysatorsystem, in denen das Katalysatorsystem beispielsweise aufgrund von starker Alterung bei uneingeschränktem Schichtbetrieb nicht mehr in der Lage ist, eine ausreichend hohe Konvertierungsleistung für die Erfüllung der Abgasschadstoffgrenzwerte zu erbringen, der Schichtbetrieb zugunsten des mit geringeren HC-Emissionen verbundenen homogen-mager oder homogen-stöchiometrischen Betriebs unterdrückt wird.

Um den Verbrauchsvorteil des geschichteten Motorbetriebs weitgehend aufrechtzuerhalten, wird der Schichtbetrieb nicht komplett, d.h. für alle Betriebszustände der Brennkraftmaschine, unterdrückt, sondern bedarfsgerecht nur in solchen Betriebsphasen mit den höchsten HC-Emissionsdurchbrüchen substituiert bzw. modifiziert. So ist es erfindungsgemäß vorgesehen, basierend auf der Temperatur eines motornah angeordneten Vorkatalysators des Katalysatorsystems und einer Kenngröße für dessen Alterungszustand fortlaufend einen zulässigen HC-Massenstrom im aktuellen Motorbetriebspunkt zu berechnen. Weiterhin wird in einer Motorsteuerung über der Motordrehzahl und der Motorbelastung ein HC-Emissionskennfeld für die Schichtbetriebsart abgelegt. Aus diesem Kennfeld wird für den vorliegenden Betriebspunkt der aktuelle HC-Massenstrom berechnet.

Die aus dem HC-Emissionskennfeld ermittelten Werte werden zusätzlich anhand der aktuell vorliegenden Motortemperatur korrigiert. Als weitere Korrekturgrößen für die HC-Emission der Brennkraftmaschine werden optional der Einspritzzeitpunkt, der Zündzeitpunkt, die Nockenwellenposition, der Saugrohrdruck, die AGR-Rate und die Position einer Ladungsbewegungsklappe im Saugrohr herangezogen. Alternativ sind für die verschiedenen Motorbetriebsparameter mehrere HC-Kennfelder abgelegt.

Überschreitet der so ermittelte HC-Massenstrom den zuvor ermittelten zulässigen Wert, so wird der Schichtbetrieb unterdrückt. Auf diese Weise wird bereits vor dem Wechsel in die Schichtbetriebsart überprüft, ob der dann vorliegende HC-Massenstrom mit ausreichend hohem Wirkungsgrad konvertiert werden kann. Durch entsprechend ausgelegte Hysteresen kann vermieden werden, daß es zu unerwünscht häufigen Betriebsartenwechseln kommt.

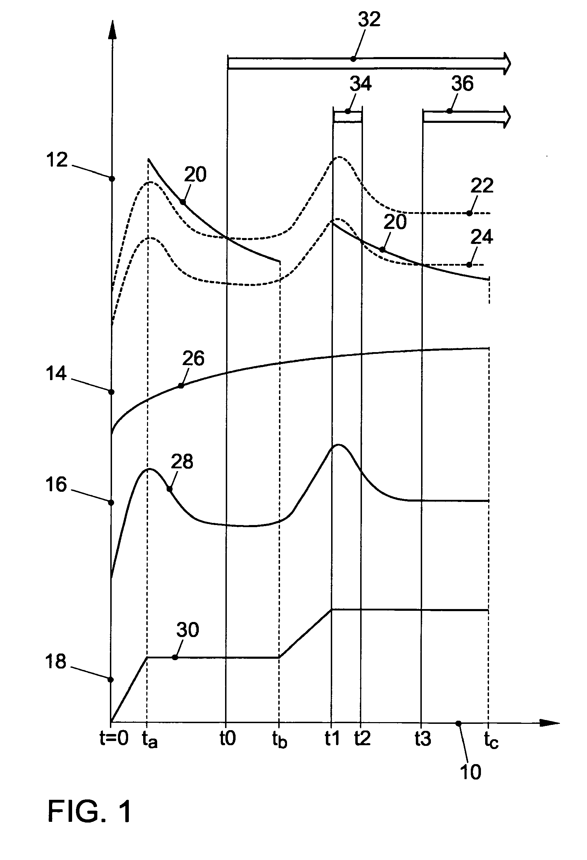

In Fig. 1 ist für ein Fahrprofil eines Kraftfahrzeugs mit Brennkraftmaschine die Wirkungsweise des Verfahrens schematisch dargestellt. In Fig. 1 ist auf der horizontalen Achse 10 die Zeit t und auf der vertikalen Achse bei 12 ein HC-Massenstrom, bei 14 eine Motortemperatur, bei 16 eine Temperatur eines Katalysators, insbesondere des Vorkatalysators, und bei 18 eine Fahrzeuggeschwindigkeit aufgetragen. Ein Graph 20 zeigt den HC-Massenstrom im Schichtbetrieb bei einem jeweiligen Betriebspunkt der Brennkraftmaschine zum Zeitpunkt t. Eine gestrichelte Linie 22 zeigt einen zulässigen HC-Massenstrom für den frischen Katalysator und eine gestrichelte Linie 24 zeigt einen zulässigen HC-Massenstrom für den gealterten Katalysator. Ein Graph 26 zeigt die Motortemperatur über die Zeit t, ein Graph 28 zeigt eine Temperatur des Vorkatalysators über die Zeit t und ein Graph 30 zeigt eine Fahrzeuggeschwindigkeit über die Zeit t für das dargestellte Fahrprofil.

Der Motor wird zum Zeitpunkt t=0 bei 20°C gestartet. Nach dem Motorstart erhöht sich die Motortemperatur 26 stetig. Der Schichtbetrieb ist im dargestellten Fahrprofil nur in den Fahrphasen mit konstanter Motorlast (konstante Geschwindigkeit 30 bei ebener Fahrbahn) möglich, da in den Beschleunigungsphasen die Motorbelastung für den Schichtbetrieb zu hoch ist. Daher ist der Graph 20 für den HC-Massenstrom im Schichtbetrieb nicht stetig kontinuierlich, sondern nur in solchen Betriebsphasen der Brennkraftmaschine aufgetragen, in denen ein Schichtbetrieb grundsätzlich möglich wäre, d.h. in den Zeitintervallen tₐ-t_{b} und t1-t_{c}. Die HC-Massenströme steigen mit zunehmender Fahrzeuggeschwindigkeit an, nehmen aber mit zunehmender Motortemperatur 26 ab. Auf der Grundlage der Konvertierungseigenschaften des Katalysators sind beispielhaft die Graphen der zulässigen HC-Massenströme für einen frischen (Graph 22) und einen gealterten (Graph 24) Katalysator in Abhängigkeit von der Katalysatortemperatur ermittelt und in Fig. 1 aufgetragen.

Das erfindungsgemäße Verfahren ermöglicht bei frischem Katalysator bereits zum Zeitpunkt t0 die Freigabe des uneingeschränkten Schichtbetriebs. Das Zeitintervall mit Schichtbetriebsfreigabe bei frischem Katalysator ist mit 32 gekennzeichnet. Mit gealtertem Katalysator ist der uneingeschränkte Schichtbetrieb nur noch zwischen den Zeitpunkten t1 und t2 (Zeitintervall 34 für Schichtbetriebsfreigabe bei gealtertem Katalysator) sowie ab dem Zeitpunkt t3 (Zeitintervall 36 für Schichtbetriebsfreigabe bei gealtertem Katalysator) freigegeben. Auf diese Weise wird beispielsweise eine Schichtbetriebsfreigabe gezielt in Abhängigkeit von dem HC-Massenstrom im Schichtbetrieb und der möglichen Katalysatorkonvertierungsleistung und nur in den emissionskritischen Phasen des Betriebs der Brennkraftmaschine unterdrückt, so daß ein größtmöglicher Verbrauchsvorteil des Schichtbetriebs auch bei gealterten Katalysatoren aufrechterhalten wird.

In einer Weiterbildung der Erfindung ist es vorgesehen, die Freigabe des Schichtbetriebs zusätzlich mit der Temperatur eines dem Vorkatalysator nachgeschalteten Hauptkatalysators, beispielsweise in Form eines NOₓ-Speicherkatalysators, zu verknüpfen, da der Hauptkatalysator mit steigender Temperatur einen zunehmend größeren Anteil der gesamten HC-Konvertierung übernehmen kann. Auch hier wird beispielsweise die für die Freigabe des Schichtbetriebs erforderliche Katalysatortemperatur als Funktion des Katalysatorzustandes ermittelt.

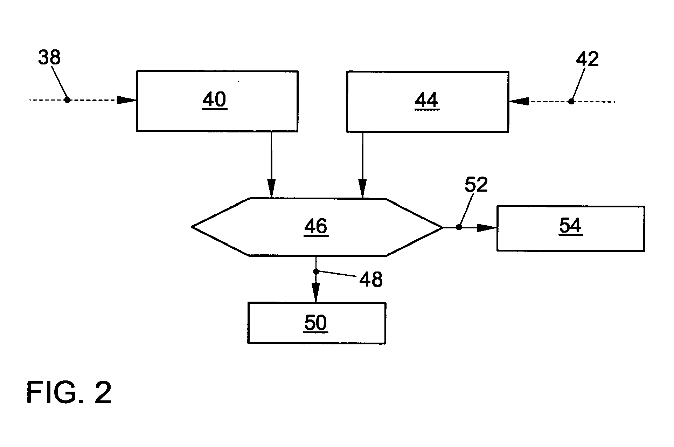

Ein Beispiel für die Funktionsweise dieser Weiterbildung ist Fig. 2 dargestellt. Bei 38 werden eine Temperatur des einen oder mehrerer Vorkatalysatoren, eine Kenngröße für die Katalysatoralterung und eine Temperatur des einen oder mehrere Hauptkatalysatoren als Eingangswerte einem Block 40 eingegeben. In dem Block 40 wird aus diesen Eingangswerten in einem ersten Schritt der zulässige HC-Massenstrom *HCzul* ermittelt. Bei 42 werden Motordrehzahl, Motorbelastung und Motortemperatur als Eingangswerte einem Block 44 eingegeben. In Block 44 wird aus diesen Eingangswerten in einem zweiten Schritt ein tatsächlicher HC-Massenstrom *HCtats* für den Schichtbetrieb ermittelt. In einem Block 46 werden in einem dritten Schritt die in Blöcken 40 und 44 ermittelten Werte *HCzul* und *HCtats* miteinander verglichen und ermittelt, ob *HCtats > HCzul* ist. Falls ja, wird bei Verzweigung 48 "ja" zu einem Schritt 4a in Block 50 weitergegangen, wobei in Block 50 der Schichtbetrieb verboten bzw. unterdrückt oder ggf. modifiziert wird. Falls nein, wird bei Verzweigung 52 "nein" zu einem Schritt 4b in Block 54 weitergegangen, wobei in Block 54 der Schichtbetrieb zugelassen wird.

Gemäß einer weiteren, bevorzugten Weiterbildung der Erfindung wird nicht zwingend von dem Schichtbetrieb in den homogen-stöchiometrischen Betrieb umgeschaltet, sondern statt dessen erfolgt die Umschaltung in einen Schichtbetriebsmodus mit HC-optimierten Motorbetriebsparametern, wodurch ein Teil des Verbrauchsvorteils ggü. dem homogen-stöchiometrischen Betrieb erhalten werden kann. Beispielsweise erfolgt ein Schichtbetrieb mit gleichzeitiger Androsselung der Brennkraftmaschine, so daß sich eine erhöhte Abgastemperatur und damit eine erhöhte Katalysatortemperatur einstellt, wodurch sich der zulässige HC-Massenstrom *HCzul,* d.h. der maximale vom Katalysator konvertierbare HC-Massenstrom, entsprechend erhöht und somit ggf. über dem tatsächlich sich einstellenden HC-Massenstrom *HCtats* liegt.

Eine weitere Alternative ist der Wechsel in die homogen-magere Betriebsart, die typischerweise ebenfalls geringere HC-Emissionen als der Schichtbetrieb aufweist.

Mit der voranstehend beschriebenen Erfindung wird es ferner möglich, den Edelmetallgehalt von Katalysatoren abzusenken. Fahrzeuge mit magerlauffähigen Brennkraftmaschinen, die im Neuen Europäischen Fahrzyklus NEFZ mit thermisch ungeschädigten Katalysatoren mit einer gespeicherten Schwefelmasse <0,2 g/Liter Katvolumen und einem zeitlich gefeuerten Magerbetriebsanteil ohne Schubphasen mit Lambda > 1,15 von zumindest 250 Sekunden, insbesondere mindestens 350 Sekunden, eine HC-Emission von <0,07 g/km und eine NOx-Emission von <0,05 g/km erreichen, werden heute im Stand der Technik mit Katalysatoren ausgerüstet, die Edelmetallgehalte von größer oder gleich 100 g/ft³ (3,59 g/dm³) aufweisen.

Bei Einsatz von Katalysatorsystemen mit zumindest einem NOₓ-Speicherkatalysator und eventuell zumindest einem vorgeschalteten Vorkatalysator sowie dem erfindungsgemäßen Verfahren kann der Edelmetallgehalt zumindest eines Katalysators auf kleiner 100 g/ft³ (3,59 g/dm³), insbesondere kleiner oder gleich 80 g/ft³ (2,87 g/dm³), vorzugsweise kleiner oder gleich 60 g/ft³ (2,15 g/dm³) abgesenkt werden, ohne daß nach Ofenalterung des/der Speicherkatalysator(en) mit abgesenktem Edelmetallgehalt für 4 Stunden bei 850°C und ggf. des/der Vorkatalysator(en) für 4 Stunden bei 1.100°C mit 2% O₂ und 10% H₂O in demselben Fahrzeug und Anwendung des NEFZ eine HC-Emission von 0,1 g/km und eine NOx-Emission von 0,08 g/km überschritten wird.

## Patentansprüche

1. Verfahren zum Betreiben einer Brennkraftmaschine, wobei in einer Abgasnachbehandlungsanlage zumindest ein in einem Abgas enthaltener HC-Massenstrom katalytisch konvertiert wird,
**gekennzeichnet durch,**
(a) Bestimmen eines von der Abgasnachbehandlungsanlage an einem aktuellen Betriebspunkt der Brennkraftmaschine maximal konvertierbaren HC-Massenstromes in Abhängigkeit von einem Zustand der Abgasnachbehandlungsanlage,
(b) Bestimmen eines von der Brennkraftmaschine abgegebenen, aktuellen HC-Massenstromes für wenigstens eine vorbestimmte Betriebsart an dem aktuellen Betriebspunkt der Brennkraftmaschine,
(c) Vergleichen des in Schritt (a) bestimmten maximal konvertierbaren HC-Massenstrom mit dem in Schritt (b) bestimmten aktuellen HC-Massenstrom für die vorbestimmte Betriebsart, und
(d) Unterdrücken und/oder Modifizieren der vorbestimmten Betriebsart, wenn der in Schritt (a) bestimmte maximal konvertierbare HC-Massenstrom kleiner ist als der in Schritt (b) bestimmte aktuelle HC-Massenstrom und Zulassen der vorbestimmten Betriebsart, wenn der in Schritt (a) bestimmte maximal konvertierbare HC-Massenstrom größer oder gleich ist als der in Schritt (b) bestimmte aktuelle HC-Massenstrom.

2. Verfahren nach Anspruch 1, **dadurch gekennzeichnet, daß** der Zustand der Abgasnachbehandlungsanlage eine Temperatur und/oder einen Alterungszustand der Abgasnachbehandlungsanlage umfaßt.

3. Verfahren nach Anspruch 2, **dadurch gekennzeichnet, daß** die Temperatur der Abgasnachbehandlungsanlage als eine Temperatur eines oder mehrerer Vorkatalysatoren und/oder eines oder mehrerer Hauptkatalysatoren der Abgasnachbehandlungsanlage bestimmt wird.

4. Verfahren nach Anspruch 2 oder 3, **dadurch gekennzeichnet, daß** der Alterungszustand der Abgasnachbehandlungsanlage als ein Alterungszustand eines oder mehrerer Vorkatalysatoren und/oder eines oder mehrerer Hauptkatalysatoren der Abgasnachbehandlungsanlage bestimmt wird.

5. Verfahren nach wenigstens einem der vorhergehenden Ansprüche, **dadurch gekennzeichnet, daß** der aktuelle Betriebspunkt in Abhängigkeit von einer Motordrehzahl und einer Motorlast bestimmt wird.

6. Verfahren nach wenigstens einem der vorhergehenden Ansprüche, **dadurch gekennzeichnet, daß** die vorbestimmte Betriebsart der Brennkraftmaschine ein homogen-stöchiometrischer Betrieb, ein Homogen-Magerbetrieb und/oder ein Schichtbetrieb ist.

7. Verfahren nach wenigstens einem der vorhergehenden Ansprüche, **dadurch gekennzeichnet, daß** in Schritt (b) der aktuelle HC-Massenstrom aus einem für eine jeweilige Betriebsart vorbestimmten HC-Emissionskennfeld bestimmt wird.

8. Verfahren nach wenigstens einem der vorhergehenden Ansprüche, **dadurch gekennzeichnet, daß** der in Schritt (b) bestimmte aktuelle HC-Massenstrom in Abhängigkeit von wenigstens einem Betriebsparameter des aktuellen Betriebspunktes der Brennkraftmaschine korrigiert wird.

9. Verfahren nach Anspruch 8, **dadurch gekennzeichnet, daß** der Betriebsparameter eine Motortemperatur, einen Einspritzzeitpunkt, einen Zündzeitpunkt, eine Nockenwellenposition, einen Saugrohrdruck, eine AGR-Rate und/oder eine Position einer Ladungsbewegungsklappe umfaßt.

10. Verfahren nach wenigstens einem der vorhergehenden Ansprüche, **dadurch gekennzeichnet, daß** die in Schritt (d) unterdrückte Betriebsart mit derart modifizierten Betriebsparametern zugelassen wird, daß der sich dann einstellende HC-Massenstrom kleiner oder gleich als der in Schritt (a) bestimmte maximal konvertierbare HC-Massenstrom ist.

## Claims

1. Method for operating an internal combustion engine, with at least one HC mass flow contained in an exhaust gas being catalytically converted in an exhaust gas aftertreatment system,
**characterized by**
(a) determining, as a function of a state of the exhaust gas aftertreatment system, a maximum HC mass flow which can be converted by the exhaust gas aftertreatment system at a present operating point of the internal combustion engine,
(b) determining a present HC mass flow, which is discharged by the internal combustion engine, for at least one predetermined operating mode at the present operating point of the internal combustion engine,
(c) comparing the maximum HC mass flow which can be converted determined in step (a) with the present HC mass flow for the predetermined operating mode determined in step (b), and
(d) suppressing and/or modifying the predetermined operating mode if the maximum HC mass flow which can be converted determined in step (a) is less than the present HC mass flow determined in step (b), and permitting the predetermined operating mode if the maximum HC mass flow which can be converted determined in step (a) is greater than or equal to the present HC mass flow determined in step (b).

2. Method according to Claim 1, **characterized in that** the state of the exhaust gas aftertreatment system comprises a temperature and/or an ageing state of the exhaust gas aftertreatment system.

3. Method according to Claim 2, **characterized in that** the temperature of the exhaust gas aftertreatment system is determined as a temperature of one or more pre-catalytic converters and/or of one or more main catalytic converters of the exhaust gas aftertreatment system.

4. Method according to Claim 2 or 3, **characterized in that** the ageing state of the exhaust gas aftertreatment system is determined as an ageing state of one or more pre-catalytic converters and/or of one or more main catalytic converters of the exhaust gas aftertreatment system.

5. Method according to at least one of the preceding claims, **characterized in that** the present operating point is determined as a function of an engine rotational speed and an engine load.

6. Method according to at least one of the preceding claims, **characterized in that** the predetermined operating mode of the internal combustion engine is a homogeneous-stoichiometric mode, a homogeneous-lean mode and/or a stratified-charge mode.

7. Method according to at least one of the preceding claims, **characterized in that**, in step (b), the present HC mass flow is determined from an HC emissions characteristic map which is predetermined for a respective operating mode.

8. Method according to at least one of the preceding claims, **characterized in that** the present HC mass flow determined in step (b) is corrected as a function of at least one operating parameter of the present operating point of the internal combustion engine.

9. Method according to Claim 8, **characterized in that** the operating parameter comprises an engine temperature, an injection time, an ignition time, a camshaft position, an intake pipe pressure, an EGR rate and/or a position of a charge movement flap.

10. Method according to at least one of the preceding claims, **characterized in that** the operating mode which is suppressed in step (d) is permitted with operating parameters modified in such a way that the HC mass flow which is then generated is less than or equal to the maximum HC mass flow which can be converted determined in step (a).

## Revendications

1. Procédé pour faire fonctionner un moteur à combustion interne, dans lequel, dans une installation de post-traitement des gaz d'échappement, au moins un débit massique de HC contenu dans les gaz d'échappement est converti par voie catalytique,
**caractérisé par** :
(a) la détermination d'un débit massique de HC maximal pouvant être converti par l'installation de post-traitement des gaz d'échappement en un point de fonctionnement actuel du moteur à combustion interne, en fonction d'un état de l'installation de post-traitement des gaz d'échappement,
(b) la détermination d'un débit massique de HC actuel fourni par le moteur à combustion interne, pour au moins un type de fonctionnement prédéterminé au point de fonctionnement actuel du moteur à combustion interne,
(c) la comparaison du débit massique de HC maximal pouvant être converti déterminé dans l'étape (a) avec le débit massique de HC actuel déterminé dans l'étape (b) pour le type de fonctionnement prédéterminé, et
(d) suppression et/ou modification du type de fonctionnement prédéterminé lorsque le débit massique de HC maximal pouvant être converti déterminé dans l'étape (a) est inférieur au débit massique de HC actuel déterminé dans l'étape (b), et autorisation dudit type de fonctionnement prédéterminé lorsque le débit massique de HC maximal pouvant être converti déterminé dans l'étape (a) est supérieur ou égal au débit massique de HC actuel déterminé dans l'étape (b).

2. Procédé selon la revendication 1, **caractérisé en ce que** l'état de l'installation de post-traitement des gaz d'échappement comprend une température et/ou un état de vieillissement de l'installation de post-traitement des gaz d'échappement.

3. Procédé selon la revendication 2, **caractérisé en ce que** la température de l'installation de post-traitement des gaz d'échappement est déterminée en tant que température d'un ou de plusieurs précatalyseurs et/ou d'un ou de plusieurs catalyseurs principaux de l'installation de post-traitement des gaz d'échappement.

4. Procédé selon la revendication 2 ou 3, **caractérisé en ce que** l'état de vieillissement de l'installation de post-traitement des gaz d'échappement est déterminé en tant qu'état de vieillissement d'un ou de plusieurs précatalyseurs et/ou d'un ou de plusieurs catalyseurs principaux de l'installation de post-traitement des gaz d'échappement.

5. Procédé selon au moins l'une quelconque des revendications précédentes, **caractérisé en ce que** le point de fonctionnement actuel est déterminé en fonction d'un régime du moteur et d'une charge du moteur.

6. Procédé selon au moins l'une quelconque des revendications précédentes, **caractérisé en ce que** le type de fonctionnement prédéterminé du moteur à combustion interne est un fonctionnement stoechiométrique homogène, un fonctionnement à mélange pauvre homogène et/ou un fonctionnement stratifié.

7. Procédé selon au moins l'une quelconque des revendications précédentes, **caractérisé en ce que** dans l'étape (b), le débit massique de HC actuel est déterminé à partir d'un champ caractéristique d'émissions de HC prédéterminé pour chaque type de fonctionnement particulier.

8. Procédé selon au moins l'une quelconque des revendications précédentes, **caractérisé en ce que** le débit massique de HC actuel déterminé dans l'étape (b) est corrigé en fonction d'au moins un paramètre de fonctionnement du point de fonctionnement actuel du moteur à combustion interne.

9. Procédé selon la revendication 8, **caractérisé en ce que** les paramètres de fonctionnement sont une température du moteur, un instant d'injection, un instant d'allumage, une position de l'arbre à cames, une pression du tuyau d'admission, un taux de gaz d'échappement recirculés (AGR) et/ou une position d'un volet de déplacement de charge.

10. Procédé selon au moins l'une quelconque des revendications précédentes, **caractérisé en ce que** le type de fonctionnement supprimé dans l'étape (d) est autorisé avec des paramètres de fonctionnement modifiés de telle sorte que le débit massique de HC s'établissant alors soit inférieur ou égal au débit massique de HC maximal pouvant être converti déterminé dans l'étape (a).
